(19) Europäisches Patentamt

European Patent Office

Office européen des brevets

(11) **EP 0 547 548 B1**

(12) **EUROPEAN PATENT SPECIFICATION**

(45) Date of publication and mention
of the grant of the patent:
**12.03.1997 Bulletin 1997/11**

(51) Int Cl.⁶: **G01C 21/20**

(21) Application number: **92121263.5**

(22) Date of filing: **14.12.1992**

(54) **Travel guiding apparatus for vehicle**

Fahrtleitvorrichtung für Fahrzeug

Dispositif de guidage de voyage pour véhicule

(84) Designated Contracting States:
**DE FR GB**

(30) Priority: **18.12.1991 JP 361062/91**

(43) Date of publication of application:
**23.06.1993 Bulletin 1993/25**

(73) Proprietor: **HONDA GIKEN KOGYO KABUSHIKI KAISHA**
**Minato-ku Tokyo (JP)**

(72) Inventor: **Matsumoto, Toshiyuki,**
**c/o Kabushiki Kaisha Honda**
**Wako-shi, Saitama (JP)**

(74) Representative:
**Prechtel, Jörg, Dipl.-Phys. Dr. et al**
**Patentanwälte,**
**H. Weickmann, Dr. K. Fincke,**
**F.A. Weickmann, B. Huber,**
**Dr. H. Liska, Dr. J. Prechtel,**
**Dr. B. Böhm, Dr. W. Weiss,**
**Kopernikusstrasse 9**
**81679 München (DE)**

(56) References cited:
WO-A-92/08952          DE-A- 4 008 460
US-A- 4 984 168

## Description

The present invention relates to a vehicle travel guiding apparatus for determining a travel course between a start point and a target point, according to the preamble part of claim 1.

The Japanese laid open patent publications No.133600-87 and No. 173297-89 disclose a vehicle travel guiding apparatus, which is capable of guiding a vehicle by searching a course from a starting point to a target point on a road map shown on a display screen, and which is capable of setting any start and target points on a road map shown on a display screen and searching digital map data to find an optimal route therebetween for the purpose of guiding the vehicle.

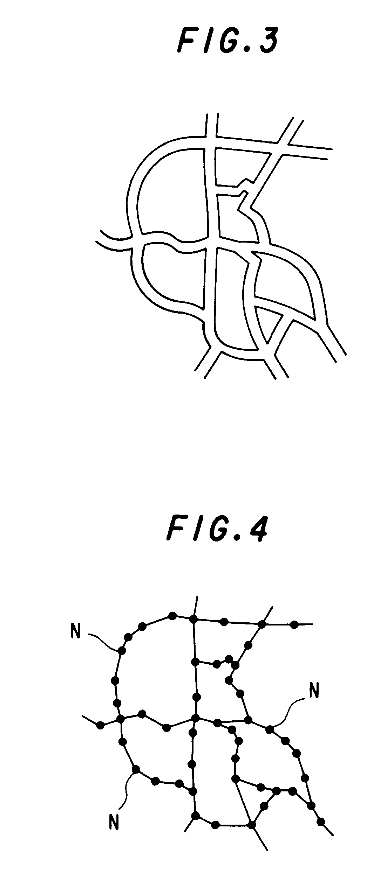

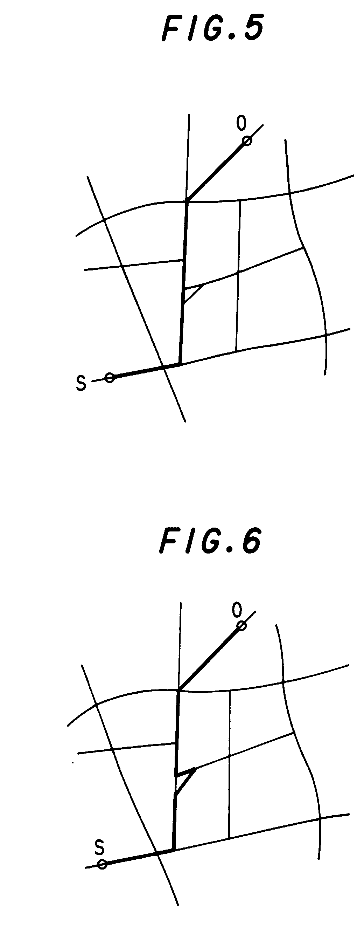

The digital map information contains data on positions and connections of nodes N of line segments which, as shown in Fig. 4, approximately represent a figure of actual mapped roadways shown in Fig. 3.

A prior method for searching a course on the basis of the digital map data is such that nodes on a road map are sequentially searched according to a known algorithm such as "Dijkstra" so as to obtain the shortest distance from a start point to a target point, whereat line segments connecting the start point with the target point are of least cost, for example, in terms of total length (distance) or mean travel time to be required or in combination with other roadway's parameters such as road width, user tax and the like.

It may be considered that a plurality of possible different courses from the start point to the target point are searched one by one by priority of smaller cost of line segments therebetween and one of them is finally selected.

However, when the driver does not desire to select the first searched course (shown in Fig. 5) because of, for example, a congested street included therein and he requests finding another course, the apparatus may search a next course that is almost the same as the previous one but has a minimum bypassing as shown in Fig. 6. This, of course, does not meet the driver's requirement.

In case when the driver requests another course from the start point to the target so as to find optimal one with due consideration, for example, of traffic congestion, the apparatus is requested to search an effective course that is different from the previously searched one.

The problem to be solved is that when searching two or more different courses between start and target points set on a road map shown on a display screen on the basis of digital data of the road map by priority of smaller cost of its total line segments, the conventional apparatus can select only a course substantially similar to the preceding one, omitting different courses from the scope of searching.

From US-4,984,168, a vehicle travel guiding apparatus for determining an optimal course between a start point and a target point is known. The apparatus comprises a map information memory for storing digitized road map data, the respective roads and intersections having assigned cost values which are denoted as resistance values. A course search unit searches an optimal course as travel course between the start point and the target point, whereby roads having the lowest cost value are preferably selected. The optimal course found by the course search unit, is plotted on a display of an input/output unit.

Once the calculation of an optimal route has been performed, the apparatus apparently outputs - during driving - a number of identifications of roads to be travelled next, beginning at the actual position, in order to follow the route calculated. In cases where a road segment is not open to traffic, the cost value of this road segment can be increased substantially and the route determination is recalculated.

The apparatus is further adapted to allow a certain route selection. If the driver does not take a route segment recommended by the apparatus and confirms that he made an intentional change of route, the cost value of this recommended route segment is raised considerably so that it will not be taken into account during recalculation of the optimal route. If the driver neither confirms that he made a driving error, nor that he made an intentional change in route, the cost value of the route segment recommended but not taken, is automatically increased in increments and the route is recalculated. Accordingly, if the driver ignores the recommendation of the apparatus repeatedly, the option of the recommended route segment not being taken "becomes more and more unlikely and finally disappears". One has to assume that this wording cited from the US-patent document (ccl. 6, 1s. 40-42) expresses the fact that the apparatus in effect tries to guide the driver back to the optimal route, once having been calculated and only after the driver having repeatedly ignored the recommendations of the apparatus, the corresponding sequence of recalculations of the route (each calculation being effected after increasing the cost value of the respective route segment recommended but not taken) produces an optimal route not being substantially similar to the optimal route having been calculated at the beginning.

Besides the route correction described, the US-patent document discloses no options how the determining procedure of the travel course between the start point and the target point may be influenced. There is particularly no provision for the case that the driver does not desire to select the optimal course searched by the course search unit and wishes to be offered a different course before starting his journey.

From DE-40 08 460A1 a vehicle travel guiding apparatus for determining an optimal course between a start point and a target point is known. The apparatus searches an optimal course between the start point and the target point on the basis of cost values assigned to route segments, said cost values corresponding to the required travelling time. The apparatus is connected to a radio receiver which supplies information on route segments which are affected by hindrances like traffic jams, to the apparatus, said information being included in traffic news broadcasted by a radio station. The information supplied to the apparatus allows an actualization of the cost values of the respective route segments.

From WO92/08952, said document being post-published and therefore only relevant to the question of novelty, discloses a vehicle guidiung apparatus for determining a travel course between a start point and a target point. The apparatus comprises a map information memory for storing digitized road map data. A course search unit is provided, which is adapted for searching an optimal course between the start point and the target point on the basis of cost values (here the required travelling times or the distances) assigned to the route segments. The course search unit firstly searches a first optimal course giving a minimal total cost value associated with the course. Then the longest major road segments making up at least 40% of said route are identified. Then a second optimal course is searched, with the identified major road segments being excluded from the search in such a way that the second optimal course must not comprise the identified major road segments. The same procedure is repeated also with the second optimal course to calculate a third optimal course. The three optimal courses are displayed on a display so that the driver can make a choice therebetween.

It may be deduced from the aforesaid that the course search unit is not adapted for searching a next optimal course with increased total cost value by increasing the cost values of all line segments of the current optimal course found by the course search unit in the previous search and repeating the search for an optimal course.

It is an object of the present invention to provide a vehicle guiding apparatus which is capable of searching a plurality of different travel courses between a start point and a target point, which courses are searched on the basis of a cost value minimization criterion, said courses tending to be substantially different from one another.

This object is achieved by the vehicle travel guiding apparatus having the features of claim 1.

Since the cost values of all line segments of the current optimal course found by the course search unit as travel course are increased before the search for an optimal course as travel course is repeated, the chances that the course search unit in the subsequent search merely finds a course substantially similar to the preceding one, are condiderably reduced. It is further not necessary to alter the optimization routine, for example by adjusting the termination criteria. The search can always be effected using the same search algorithm without any adjustments.

Accordingly, the present invention provides a vehicle travel guiding apparatus which is capable of searching a plurality of different courses from a start point to a target one by one by priority of smaller cost of total line segments composing the route on the basis of digital data of a road map in such a way that a subsequent optimal route may be searched after increasing the costs of the line segments of the previously searched one.

The present invention further provides a method for determining a travel course between a start point and a target point on the basis of road map data, said method being defined by Claim 12.

## BRIEF DESCRIPTION OF DRAWINGS

Fig. 1 is a block diagram showing an example of a vehicle travel guiding apparatus embodying the present invention.
Fig. 2 shows an example of the content of a picture shown on a display screen of the apparatus shown in Fig. 1.
Fig. 3 shows an example of a figure of actual roadways.
Fig. 4 shows a digital map image of the roadSshown in Fig. 3.
Figs. 5 shows an example of a last searched travelling course.
Fig. 6 shows an example of a course which has a path partially bypassing by a small distance from the last searched course.
Fig. 7 shows an example of a different course searched next to the last one.
Fig. 8 is a flow chart of data processing for changing a searched course to next one.

In the drawings, 1 is a distance sensor, 2 is a direction sensor, 3 is a signal processing device, 4 is a travelling path memory, 5 is a map information memory, 6 is a memory reading-out device, 7 is a display and 8 is a operating device.

## DESCRIPTION OF THE PREFERRED EMBODIMENTS

Referring now to the drawings, a preferred embodiment of the present invention will be described in detail as follows:

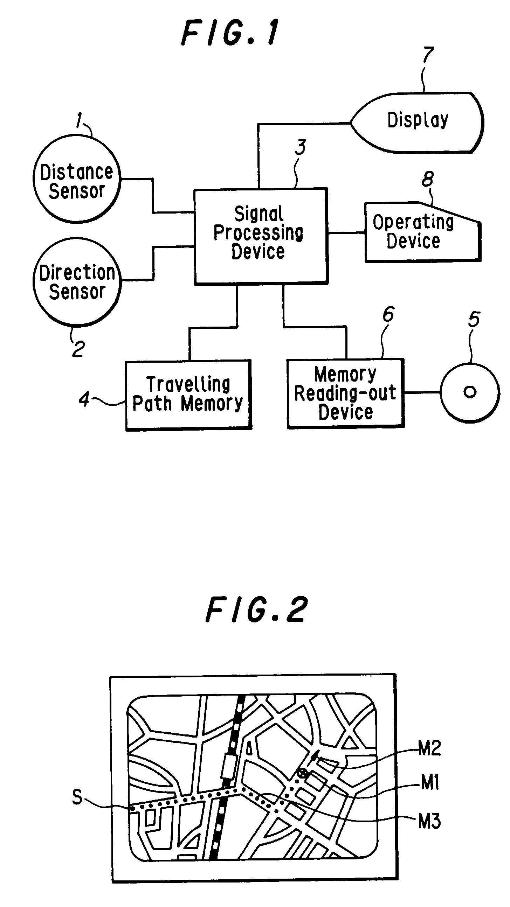

It will be observed from Fig. 1 that a vehicle travel guiding apparatus according to the present invention comprises, for example, a distance sensor 1 producing a pulse signal per unit running distance to be determined by rotations per minute of the vehicle wheel axis; a direction sensor producing an output signal proportional to a change of the vehicle running direction, e.g. a change of angular velocity of yaw direction; a microcomputer-aided processing unit 3 which calculates a travelling distance of the vehicle by counting a number of pulse signals from the distance sensor 1, determines current location of the vehicle by X-Y coordinates by sequential calculation and controls whole system of the travel guiding apparatus; a travelling path memory 4 for sequentially storing continuously changing data on coordinates of vehicle's current location and keeping said data as information of finite sequential locations; a map information memory 5 wherein digitized road map data are preliminarily stored; a reading-out device 6 for selectively reading-out road map data for necessary area from the memory 5; a display unit 7 for indicating on its screen a road map reproduced on the basis of the read-out digital road map data and also for indicating thereon renewable current location of the vehicle together with its travelling path and direction as necessary; an operating device 8 which gives operational commands to the signal processing unit 3 for selecting a road map area to be indicated on the screen of the display unit 7 and setting a start and a target points on the indicated map, and also selectively gives commands necessary for indicating travelling path and running direction, changing over the direction of the indicated map and running path, sifting indicating positions, partially enlarging the map and travelling path, selecting a scale of a picture on the display screen and changing other settings for displaying.

In thus constructed apparatus, a road map is selectively read out and indicated on the screen of the display unit 7, a current location of the vehicle in X-Y coordinate system is continuously calculated to be renewed with the vehicle travelling according to the map scale preset by the signal processing unit 3, the calculation results are subsequently sent to the travel path memory unit 4 which in turn renews its memory content and the renewed information is read out therefrom and sent to the display unit 7.

As shown in Fig. 2, while the vehicle travels on the roadway, the display unit 7 indicates the road map on its screen, imitatively indicating thereon marks M1, M2 and M3 which denote, respectively, the vehicle's current position, its current running direction and travel path from the start point S to the current position.

The vehicle travel guiding apparatus according to the present invention is capable of searching a course having a least cost of line segments (e.g. distance, mean required travelling time or the combination of them) from a start point to a target point preset on the road map shown on the display screen according to the digital road map data read-out from the road map memory 5 by the signal processing unit 3; determining an optimal route with consideration of traffic conditions such as one-way traffic or the like and indicating said course in a special color on the road map on the display screen and renewing the current location of the vehicle in the indicated course so as to guide the vehicle driver.

There are many kinds of known methods applicable for a basic algorithm for searching travelling courses and also for determining an optimal one.

The present invention provides the possibility of cancelling the searched course by reason of undesirable traffic conditions by inputting a cancelling command into the signal processing unit 3 through the operating device 8.

When the searched course was cancelled, the signal processing unit 3 searches another course having a series of least costing segments from the start point to the target points.

In this case the cost of line segments of the cancelled course A is preliminarily and apparently increased so as to eliminate the possibility of searching a course similar to the cancelled course A and to select another course B being substantially different from the course A.

In practice, the above-mentioned processing is carried out, for example, in the following manner:

If a total number of line segments $\ell$ of a course from a start point to a target point preset on a road map is N= {1,2,3, -n} and a set of line segments is {$\ell$i(i=[1,n]}, a course P from the start point to the target point is represented by the following equation (1):

$$P = \{\ell p1,\ \ell p2,\ \ell p3,\ -\ \ell pk|p1,\ p2\text{-}\in N\} \tag{1}$$

where the course P is also expressed as follows:

$$P = \{P1,\ P2,\ P3,\ \cdots\cdots\cdots\ Pk\} \tag{2}$$

Denoting the cost of the line segments $\ell$pi (only a distance in this case) by Cpi, the distance between the start point and the target point is given by the following equation (3):

$$L = \sum_{i \in P} Ci \tag{3}$$

Now we suppose that a course P having the least cost (least distance) of line segments is found.

In case of necessity to cancel the searched course P the costs (Cp1, Cp2, Cp3, ...) of the line segments ($\ell$p1, $\ell$p2,

ℓp3 ...) constituting the course to be cancelled are substituted by values (Cp1', Cp2', Cp3'...) according to the following equation (4):

$$
\left.\begin{array}{l}
\mathtt{Cpi'\ =\ Cp1*\ x\ +\ y} \\
\mathtt{Cp2'\ =\ Cp2*\ x\ +\ y} \\
\qquad\qquad | \\
\mathtt{Cpk'\ =\ Cpk*\ x\ +\ y}
\end{array}\right\} \qquad\text{————————————} \quad (4)
$$

where x is a weight coefficient (x≧1.0) and y is a weight (y≧0.0).

In practice, setting is made, for example, as x=1.2 and y=0.1

When another course P' having the least cost (least distance) of line segments from the start point to the target point is searched after cancelling the preceding course and substituting the costs (Cp1,Cp2,Cp3 ...) of its line segments (ℓp1, ℓp2, ℓp3, ...), it may differ from the cancelled course P since latter has apparently increased cost of its segmental components which may be avoided as far as possible.

By forcing the apparatus repeat the above-mentioned processing it is possible to further find the 3rd course, the 4th course and so on by priority of smaller cost of line segments.

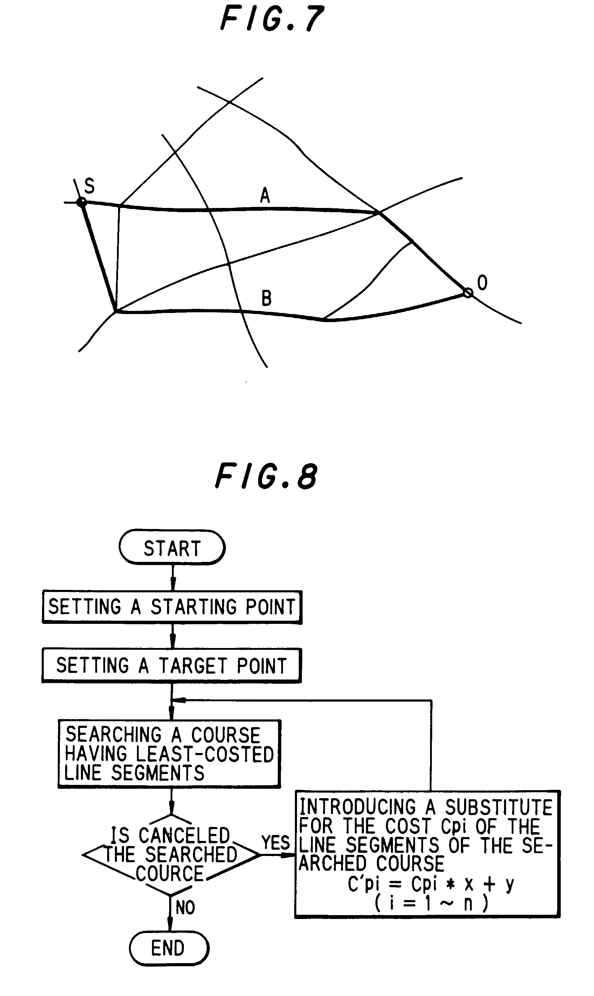

Fig. 8 shows a flow-chart of switching-over the processing operation to searching another course by the apparatus proposed by the present invention.

If there are a small number of roadways on the map, the repeat searching may lead to select again the cancelled course having the segments' cost increased, for example, by 1.2 times. In such case it is recommendable to increase the preset value "x" to 1.5 - 2.0.

In case of repeat searching in a city area map including many selectable roadways it is preferable to set "x" to 1.1-1.3 with consideration of the possibility of searching a course having a portion commonly included in the cancelled course.

The weight coefficient "x" and the weight "y" may be also variable if occasion demands.

Besides the distance, the cost of line segments can be determined as mean required travelling time, combination of distance and mean required travelling time, or combination of distance, mean required traveling time and other roadway's attributes such as road width, passing tax and the like.

As is apparent from the foregoing description, the vehicle travel guiding apparatus according to the present invention offers such an advantage that when searching a plurality of courses having the least cost of line segments from a start point to a target point preset on a road map indicated on a display screen on the basis of digitized map data by the priority of the smaller cost, it is capable of apparently increasing the segments' cost of the previously searched course and then finding-out another course being substantially different from the searched and cancelled one. This makes it possible to repeat searching an optimal course with consideration of the traffic conditions without selecting the like course again.

## Claims

1. A vehicle travel guiding apparatus for determining a travel course between a start point and a target point, comprising:

   - a map information memory (5) for storing digitized road map data, said digitized road map data including data of line segments and connecting nodes approximating an actual road network, each said line segment having an assigned cost value corresponding, for example, to its travel distance or its mean travel time;
   - a course search unit (3) for searching an optimal course between the start point and the target point as that sequence of line segments having a total cost value corresponding to the sum of the cost values of the individual line segments of said sequence, which is minimum with respect to the total cost values of alternate courses between said start point and said target point,

   characterized in that

   said course search unit (3) is adapted for cancelling the optimal course found in the previous search and searching a next optimal course substantially different from the optimal course found in the previous search and having an increased total cost value by increasing the assigned cost value of each individual line segment of the optimal course found in the previous search and by repeating the search for an optimal course as travel course.

2. A vehicle travel guiding apparatus according to claim 1, characterized by operating means comprising

- a display unit (7) for showing a current travel course between the start point and the target point found by the course search unit (3);
- an operating device (8) for optionally inputting into said course search unit (3) a cancelling command to cancel the current optimal course and start said search for a next optimal course.

3. A vehicle travel guiding apparatus according to claim 1 or 2, characterized in that the cost values relate to distances.

4. A vehicle travel guiding apparatus according to claim 1 or 2, characterized in that the cost values relate to mean required travelling times.

5. A vehicle travel guiding apparatus according to claim 1 or 2, characterized in that the cost values relate to combinations of distance and mean required travelling time.

6. A vehicle travel guiding appartus according to claim 1 or 2, characterized in that the cost values relate to combinations of distance, mean required travelling time and other road attributes as road width, traffic tax and the like.

7. A vehicle travel guiding apparatus according to one of the preceding claims, characterized in that said start point and said target point are presettable on a road map indicated on a display screen.

8. A vehicle travel guiding apparatus according to one of the preceding claims, characterized in that the increased cost value (CPi') of the respective line segment is obtained by multiplying the current cost value (CPi) of said line segment by a preset coefficient (x) and adding a preset constant (y) to it, the coefficient being greater than or equal to one, and the constant being greater than or equal to zero.

9. A vehicle travel guiding apparatus according to claim 8, characterized in that the coefficient (x) and the constant (y) are adjustable.

10. A vehicle travel guiding apparatus according to claim 8 or 9, characterized in that in cases of the actual road network comprising a small number of roadways the coefficient (x) is increased with respect to cases of the actual road network comprising a large number of roadways.

11. A vehicle travel guiding apparatus according to claim 10, characterized in that the coefficient (x) is preset to 1.5 - 2.0 in cases of the actual road network comprising a small number of roadways, and the coefficient (x) is preset to 1.1 - 1.3 in cases of the actual road network comprising a large number of roadways.

12. A method for determining a travel course between a start point and a target point on the basis of road map data, said road map data including data of line segments and connecting nodes approximating an actual road network, each said line segment having an assigned cost value, a course between the start point and the target point being defined by a sequence of line segments and having a total cost value corresponding to the sum of the cost values of the individual line segments of said sequence, said method comprising the steps of

a) searching an optimal course between the start point and the target point having a total cost value which is minimum with respect to the total cost values of alternate courses between said start point and said target point; characterized in the further step of

b) cancelling the optimal course found in the previous step and increasing the assigned cost value of each individual line segment of the optimal course found in step a) and repeating step a) thereafter,
wherein steps a) and b) may be repeated one or several times.

13. A method according to claim 12, characterized in that the current optimal course found in step a) is displayed and in that step b) is effected if the displayed optimal course is not approved.

14. A method according to claim 12 or 13, characterized in that the increased cost value (CPi') of the respective line segment is obtained by multiplying the current cost value (CPi) of said line segment by a preset coefficient (x) and adding a preset constant (y) to it, the coefficient being greater than or equal to one, and the constant being greater than or equal to zero.

15. A method according to claim 14, characterized in that the coefficient (x) and the constant (y) are adjustable.

16. A method according to claim 14 or 15, characterized in that in cases of the actual road network comprising a small number of roadways the coefficient (x) is increased with respect to cases of the actual road network comprising a large number of roadways.

**Patentansprüche**

1. Fahrzeugfahrleitvorrichtung zum Bestimmen eines Fahrkurses zwischen einem Startpunkt und einem Zielpunkt, umfassend:

   - einen Karteninformationsspeicher (5) zum Speichern digitalisierter Wegekartendaten, wobei die digitalisierten Wegekartendaten Daten von Liniensegmenten und Verbindungsknoten umfassen, die ein tatsächliches Wegenetz approximieren, wobei jedes Liniensegment einen zugeordneten Kostenwert aufweist, der zum Beispiel seiner Fahrstrecke oder seiner mittleren Fahrzeit entspricht;
   - eine Kurssucheinheit (3) zum Suchen eines optimalen Kurses zwischen dem Startpunkt und dem Zielpunkt als jene Folge von Liniensegmenten, die einen Gesamtkostenwert aufweist, der der Summe der Kostenwerte der einzelnen Liniensegmente der Folge entspricht und bezüglich den Gesamtkostenwerten alternativer Kurse zwischen dem Startpunkt und dem Zielpunkt minimal ist,

   **dadurch gekennzeichnet,** daß die Kurssucheinheit (3) dafür ausgelegt ist, den in der vorangegangenen Suche gefundenen optimalen Kurs zu annullieren und einen nächsten optimalen Kurs zu suchen, der von dem in der vorangegangenen Suche gefundenen optimalen Kurs wesentlich verschieden ist und einen vergrößerten Gesamtkostenwert aufweist, indem sie die zugeordneten Kostenwerte jedes einzelnen Liniensegments des in der vorangegangenen Suche gefundenen optimalen Kurses vergrößert und die Suche nach einem optimalen Kurs als Fahrkurs wiederholt.

2. Fahrzeugfahrleitvorrichtung nach Anspruch 1, gekennzeichnet durch Bedienungsmittel, umfassend

   - eine Anzeigeeinheit (7) zum Zeigen eines gegenwärtigen, durch die Kurssucheinheit (3) gefundenen Fahrkurses zwischen dem Startpunkt und dem Zielpunkt;
   - eine Bedienungsvorrichtung (8) zum optionalen Eingeben eines Annulierungskommandos in die Kurssucheinheit (3), um den gegenwärtigen optimalen Kurs zu annullieren und mit der Suche nach einem nächsten optimalen Kurs zu beginnen.

3. Fahrzeugfahrleitvorrichtung nach Anspruch 1 oder 2, dadurch gekennzeichnet, daß sich die Kostenwerte auf Entfernungen beziehen.

4. Fahrzeugfahrleitvorrichtung nach Anspruch 1 oder 2, dadurch gekennzeichnet, daß sich die Kostenwerte auf mittlere erforderliche Fahrzeiten beziehen.

5. Fahrzeugfahrleitvorrichtung nach Anspruch 1 oder 2, dadurch gekennzeichnet, daß sich die Kostenwerte auf Kombinationen von Entfernung und mittlerer erforderlicher Fahrzeit beziehen.

6. Fahrzeugfahrleitvorrichtung nach Anspruch 1 oder 2, dadurch gekennzeichnet, daß sich die Kostenwerte auf Kombinationen von Entfernung, mittlerer erforderlicher Fahrzeit und anderer Wegattribute, wie Wegbreite, Verkehrsgebühr und dergleichen beziehen.

7. Fahrzeugfahrleitvorrichtung nach einem der vorangehenden Ansprüche, dadurch gekennzeichnet, daß der Startpunkt und der Zielpunkt auf einer auf einem Anzeigeschirm angezeigten Wegekarte vorsetzbar sind.

8. Fahrzeugfahrleitvorrichtung nach einem der vorangehenden Ansprüche, dadurch gekennzeichnet, daß der vergrößerte Kostenwert ($CP_i'$) des jeweiligen Liniensegments durch Multiplizieren des gegenwärtigen Kostenwerts ($CP_i$) des Liniensegments mit einem vorgegebenen Koeffizienten (x) und zuaddieren einer vorgegebenen Konstante (y) zu ihm erhalten wird, wobei der Koeffizient größer oder gleich Eins ist und die Konstante größer oder gleich Null ist.

9. Fahrzeugfahrleitvorrichtung nach Anspruch 8, dadurch gekennzeichnet, daß der Koeffizient (x) und die Konstante (y) einstellbar sind.

**10.** Fahrzeugfahrleitvorrichtung nach Anspruch 8 oder 9, dadurch gekennzeichnet, daß in Fällen, in denen das tatsächliche Wegenetz eine kleine Anzahl von Straßen umfaßt, der Koeffizient (x) gegenüber Fällen, in denen das tatsächliche Wegenetz eine große Anzahl von Straßen umfaßt, vergrößert ist.

**11.** Fahrzeugfahrleitvorrichtung nach Anspruch 10, dadurch gekennzeichnet, daß in Fällen, in denen das tatsächliche Wegenetz eine kleine Anzahl von Straßen umfaßt, der Koeffizient (x) auf 1,5 bis 2,0 vorgesetzt ist, und daß in Fällen, in denen das tatsächliche Wegenetz eine große Anzahl von Straßen umfaßt, der Koeffizient (x) auf 1,1 bis 1,3 vorgesetzt ist.

**12.** Verfahren zum Bestimmen eines Fahrkurses zwischen einem Startpunkt und einem Zielpunkt auf der Grundlage von Wegekartendaten, wobei die Wegekartendaten Daten von Liniensegmenten und Verbindungsknoten umfassen, die ein tatsächliches Wegenetz approximieren, wobei jedes Liniensegment einen zugeordneten Kostenwert aufweist, wobei ein Kurs zwischen dem Startpunkt und dem Zielpunkt durch eine Folge von Liniensegmenten definiert ist und einen Gesamtkostenwert aufweist, der der Summe der Kostenwerte der einzelnen Liniensegmente der Folge entspricht, wobei das Verfahren die Schritte umfaßt:
  a) Suchen eines optimalen Kurses zwischen dem Startpunkt und dem Zielpunkt, welcher Kurs einen Gesamtkostenwert aufweist, der bezüglich den Gesamtkostenwerten alternativer Kurse zwischen dem Startpunkt und dem Zielpunkt minimal ist;
  **gekennzeichnet durch** den weiteren Schritt:
  b) Annullieren des in der vorangegangenen Suche gefundenen optimalen Kurses und Vergrößern des zugeordneten Kostenwerts jedes einzelnen Liniensegments des in Schritt a) gefundenen optimalen Kurses und Wiederholen des Schritts a) hiernach,
  wobei die Schritte a) und b) einmal oder mehrmals wiederholt werden können.

**13.** Verfahren nach Anspruch 12, dadurch gekennzeichnet, daß der in Schritt a) gefundene gegenwärtige optimale Kurs angezeigt wird und daß Schritt b) ausgeführt wird, falls der angezeigte optimale Kurs nicht gebilligt wird.

**14.** Verfahren nach Anspruch 12 oder 13, dadurch gekennzeichnet, daß der vergrößerte Kostenwert (CPi') des jeweiligen Liniensegments durch Multiplizieren des gegenwärtigen Kostenwerts (CPi) des Liniensegments mit einem vorgesetzten Koeffizienten (x) und zuaddieren einer vorgesetzten Konstante (y) zu ihm erhalten wird, wobei der Koeffizient größer oder gleich Eins ist und die Konstante größer oder gleich Null ist.

**15.** Verfahren nach Anspruch 14, dadurch gekennzeichnet, daß der Koeffizient (x) und die Konstante (y) einstellbar sind.

**16.** Verfahren nach Anspruch 14 oder 15, dadurch gekennzeichnet, daß in Fällen, in denen das tatsächliche Wegenetz eine kleine Anzahl von Straßen umfaßt, der Koeffizient (x) gegenüber Fällen, in denen das tatsächliche Wegenetz eine große Anzahl von Straßen umfaßt, vergrößert wird.

**Revendications**

**1.** Appareil de guidage de déplacement pour véhicule, pour déterminer un itinéraire de déplacement entre un point de départ et un point d'arrivée, comprenant :

- une mémoire (5) d'informations cartographiques pour stocker des données numérisées de cartes routières, lesdites données numérisées de cartes routières incluant des données de segments de lignes et de noeuds de liaison représentant, approximativement, un réseau routier effectif, chaque segment de ligne précité présentant une valeur de coût qui lui est assignée et correspond, par exemple, à sa distance de parcours ou à sa durée moyenne de parcours ;
- une unité (3) de recherche d'itinéraires, pour rechercher un itinéraire optimal entre le point de départ et le point d'arrivée de telle sorte que cette succession de segments de lignes présente une valeur totale de coût correspondant à la somme des valeurs de coût des segments de lignes individuels de ladite succession, qui est minimale par rapport aux valeurs totales de coût d'itinéraires alternatifs entre ledit point de départ et ledit point d'arrivée,

caractérisé par le fait que :
  ladite unité (3) de recherche d'itinéraires est conçue pour annuler l'itinéraire optimal obtenu lors de la recherche précédente, et pour rechercher un itinéraire optimal successif différant notablement de l'itinéraire optimal obtenu lors de la recherche précédente et présentant une valeur totale de coût augmentée en augmentant la valeur de coût assignée à chaque segment de ligne individuel de l'itinéraire optimal obtenu lors de la recherche précédente, et en réitérant la recherche d'un itinéraire optimal en tant qu'itinéraire de déplacement.

2. Appareil de guidage de déplacement pour véhicule, selon la revendication 1, caractérisé par des moyens d'actionnement comprenant :

- une unité d'affichage (7) pour visualiser un itinéraire de déplacement en cours entre le point de départ et le point d'arrivée, établi par l'unité (3) de recherche d'itinéraires ;
- un dispositif d'actionnement (8) pour entrer sélectivement une instruction d'annulation dans ladite unité (3) de recherche d'itinéraires, afin d'annuler l'itinéraire optimal en cours et de débuter ladite recherche d'un itinéraire optimal successif.

3. Appareil de guidage de déplacement pour véhicule, selon la revendication 1 ou 2, caractérisé par le fait que les valeurs de coût se rapportent à des distances.

4. Appareil de guidage de déplacement pour véhicule, selon la revendication 1 ou 2, caractérisé par le fait que les valeurs de coût se rapportent à des durées moyennes de déplacement requises.

5. Appareil de guidage de déplacement pour véhicule, selon la revendication 1 ou 2, caractérisé par le fait que les valeurs de coût se rapportent à des combinaisons d'une distance et d'une durée moyenne de déplacement requise.

6. Appareil de guidage de déplacement pour véhicule, selon la revendication 1 ou 2, caractérisé par le fait que les valeurs de coût se rapportent à des combinaisons d'une distance, d'une durée moyenne de déplacement requise et d'autres particularités de la route telles que la largeur de la route, un péage à acquitter, et considérations similaires.

7. Appareil de guidage de déplacement pour véhicule, selon l'une des revendications précédentes, caractérisé par le fait que ledit point de départ et ledit point d'arrivée peuvent être préétablis sur une carte routière figurant sur un écran d'affichage.

8. Appareil de guidage de déplacement pour véhicule, selon l'une des revendications précédentes, caractérisé par le fait que la valeur de coût augmentée (CPi') du segment de ligne respectif est obtenue en multipliant la valeur de coût considérée (CPi) dudit segment de ligne par un coefficient préétabli (x), et en y ajoutant une constante préétablie (y), le coefficient étant supérieur ou égal à un, et la constante étant supérieure ou égale à zéro.

9. Appareil de guidage de déplacement pour véhicule, selon la revendication 8, caractérisé par le fait que le coefficient (x) et la constante (y) sont réglables.

10. Appareil de guidage de déplacement pour véhicule, selon la revendication 8 ou 9, caractérisé par le fait que, dans des situations dans lesquelles le réseau routier effectif comprend un petit nombre d'axes de circulation, le coefficient (x) est augmenté par rapport à des situations dans lesquelles le réseau routier effectif comprend un grand nombre d'axes de circulation.

11. Appareil de guidage de déplacement pour véhicule, selon la revendication 10, caractérisé par le fait que le coefficient (x) est préréglé sur 1,5 à 2,0 dans des situations dans lesquelles le réseau routier effectif comprend un petit nombre d'axes de circulation, et le coefficient (x) est préréglé sur 1,1 à 1,3 dans des situations dans lesquelles le réseau routier effectif comprend un grand nombre d'axes de circulation.

12. Procédé pour déterminer un itinéraire de déplacement entre un point de départ et un point d'arrivée, sur la base de données de cartes routières, lesdites données de cartes routières incluant des données de segments de lignes et de noeuds de liaison représentant, approximativement, un réseau routier effectif, chaque segment de ligne précité présentant une valeur de coût qui lui est assignée, un itinéraire, entre le point de départ et le point d'arrivée, étant défini par une succession de segments de lignes, et présentant une valeur totale de coût correspondant à la somme des valeurs de coût des segments de lignes individuels de ladite succession, ledit procédé comprenant les étapes consistant à :
a) rechercher un itinéraire optimal entre le point de départ et le point d'arrivée, présentant une valeur totale de coût qui est minimale par rapport aux valeurs totales de coût d'itinéraires alternatifs entre ledit point de départ et ledit point d'arrivée ;

caractérisé par l'étape supplémentaire consistant à

b) annuler l'itinéraire optimal obtenu lors de l'étape précédente, et augmenter la valeur de coût assignée à chaque segment de ligne individuel de l'itinéraire optimal obtenu à l'étape a), puis réitérer ensuite l'étape a), les étapes a) et b) pouvant être réitérées une ou plusieurs fois.

13. Procédé selon la revendication 12, caractérisé par le fait que l'itinéraire optimal en cours obtenu à l'étape a) est affiché ; et par le fait que l'étape b) est exécutée si l'itinéraire optimal affiché n'est pas approuvé.

14. Procédé selon la revendication 12 ou 13, caractérisé par le fait que la valeur de coût augmentée (CPi') du segment de ligne respectif est obtenue en multipliant la valeur de coût considérée (CPi) dudit segment de ligne par un coefficient préétabli (x), et en y ajoutant une constante préétablie (y), le coefficient étant supérieur ou égal à un, et la constante étant supérieure ou égale à zéro.

15. Procédé selon la revendication 14, caractérisé par le fait que le coefficient (x) et la constante (y) sont réglables.

16. Procédé selon la revendication 14 ou 15, caractérisé par le fait que, dans des situations dans lesquelles le réseau routier effectif comprend un petit nombre d'axes de circulation, le coefficient (x) est augmenté par rapport à des situations dans lesquelles le réseau routier effectif comprend un grand nombre d'axes de circulation.

# FIG.1

# FIG.2

## FIG.3

## FIG.4

# FIG.5

# FIG.6

# FIG.7

# FIG.8

```
        ( START )
            │
            ▼
┌──────────────────────────┐
│ SETTING A STARTING POINT │
└──────────────────────────┘
            │
            ▼
┌──────────────────────────┐
│  SETTING A TARGET POINT  │
└──────────────────────────┘
            │
            ▼
┌──────────────────────────┐
│  SEARCHING A COURSE      │
│  HAVING LEAST-COSTED     │
│  LINE SEGMENTS           │
└──────────────────────────┘
            │
            ▼
       IS CANCELED        YES   ┌──────────────────────────────┐
      THE SEARCHED ──────────── │ INTRODUCING A SUBSTITUTE     │
        COURCE                  │ FOR THE COST Cpi OF THE      │
            │ NO                │ LINE SEGMENTS OF THE SE-     │
            ▼                   │ ARCHED COURSE               │
        ( END )                 │   C'pi = Cpi * x + y         │
                                │     ( i = 1 ~ n )            │
                                └──────────────────────────────┘
```

$$C'pi = Cpi * x + y$$
$$( i = 1 \sim n )$$